# EUROPÄISCHE PATENTSCHRIFT

(11) **EP 2 965 393 B1**
(45) Veröffentlichungstag und Bekanntmachung des Hinweises auf die Patenterteilung: **27.11.2019**
(21) Anmeldenummer: 14713365.6
(22) Anmeldetag: 06.03.2014
(51) Int. Cl.: H02B 1/40

(54) **UNTERPUTZKASTEN, INSBESONDERE UNTERPUTZVERTEILERKASTEN**
CONCEALED BOX, IN PARTICULAR CONCEALED DISTRIBUTION BOX
COFFRET ENCASTRÉ, EN PARTICULIER COFFRET DE DISTRIBUTION ENCASTRÉ

(30) Priorität: 06.03.2013 DE 102013102232
(43) Veröffentlichungstag der Anmeldung: 13.01.2016
(73) Patentinhaber: Hager Electro GmbH & Co. KG, 66440 Blieskastel (DE)
(72) Erfinder: GROS, Bernhard, 66459 Kirkel-Neuhäusel (DE); DISSEL, Klaus, 66663 Merzig (DE); GERSTNER-RIEWER, Florian, 66787 Wadgassen (DE); KARMANN, Uwe, 66113 Saarbrücken (DE); ALTMAIER, Philipp, 66839 Schmelz (DE)
(74) Vertreter: Nuss, Laurent
(86) Internationale Anmeldenummer: PCT/DE2014/100079
(87) Internationale Veröffentlichungsnummer: WO 2014/135157

(56) Entgegenhaltungen:
- WO-A1-94/09540
- WO-A1-2009/097844
- DE-A1-102007 020 198
- DE-A1-102007 020 198
- DE-A1-102008 008 162
- NZ-A- 328 884
- US-A1- 2005 023 021
- US-B1- 6 359 222

## Beschreibung

Die Erfindung betrifft einen Unterputzkasten der Elektroinstallation von Gebäuden, insbesondere einen Unterputzverteilerkasten, mit einem Kastenboden und Seitenwänden.

Aus der Druckschrift US 6,359,222 B1 ist ein Unterputzkasten mit einer variablen Höhe bekannt. Die Höhe des Unterputzkastens ist derart veränderbar, dass der Unterputzkasten in Einbaunischen mit unterschiedlicher Höhe aufgenommen werden kann.

Aus der Druckschrift WO 2009/097844 A1 ist ein Installationskasten zur Aufputzinstallation bekannt, der in einer seiner Seitenwände Schwachstellen zur Bildung von Randausnehmungen aufweist.

Aus der Druckschrift NZ 328 884 A ist ein Installationskasten bekannt, der sowohl zur Aufputzinstallation als auch zur Unterputzinstallation geeignet ist. Der Installationskasten umfasst eine Anschlussleiste, die an einer separaten Baugruppe des Installationskastens angebracht ist. Die separate Baugruppe ist unter Bildung eines Teils einer Seitenwand des Installationskastens mit dem übrigen Installationskasten verbindbar.

Das Dokument DE102008008162A1 offenbart einen Installationskasten zum Einbau in eine Wandöffnung, mit einem Kastenboden und mit dem Kastenboden einstückig verbundenen Seitenwänden.

Andere relevante Dokumente sind US2005023021A1 und WO4/09540A1

Die Elektroinstallation von Gebäuden umfasst neben Netzstromverteilern und verlegten Netzstromkabeln in zunehmenden Maße auch Signal- und Datenleitungen sowie entsprechende Verteilereinrichtungen. Letztere enthalten aktive Bauelemente und bedürfen daher einer eigenen Betriebsstromversorgung.

Die vorliegende Erfindung schafft einen neuen Unterputzkasten, insbesondere Unterputzverteilerkasten, der dieser Entwicklung Rechnung trägt.

Der Unterputzkasten nach der Erfindung ist dadurch gekennzeichnet, dass in einem durch den Kastenboden und wenigstens eine Seitenwand gebildeten Eckenbereich Einrichtungen für die Herstellung einer elektrischen Anschlussverbindung zu einer in dem Unterputzkasten montierbaren Installationskomponente angeordnet sind. Vorteilhaft werden erfindungsgemäß der Randbereich des Kastenbodens und der daran angrenzende Seitenwandbereich als bisher ungenutzter Raum zur Unterbringung von Anschlusselementen für Netz- oder/und Schwachstromverbindungen verwendet. Vorzugsweise erstreckt sich wenigstens ein Eckenbereich bildender Wandteil der Seitenwand durchgehend über die gesamte Kastentiefe senkrecht zu dem Kastenboden. Vorteilhaft nutzt der Unterputzkasten nach der Erfindung auf diese Weise den in einer quaderförmigen Mauernische zur Verfügung stehenden Installationsraum vollständig aus.

Erfindungsgemäß weisen die genannten Einrichtungen eine sich in ihrer Länge entlang dem betreffenden Rand des Kastenbodens erstreckende Anschlussleiste auf, die als Anschlusselemente mehrere Netzstromsteckdosen umfasst. In einer bevorzugten Ausführungsform können an die Netzstromsteckdosen in dem Unterputzkasten installierte, aktive Bauelemente aufweisende Geräte angeschlossen werden, insbesondere Verteilereinrichtungen für Telefon- oder/und Datenleitungen.

Erfindungsgemäß sind die genannten Einrichtungen an einer separaten Baugruppe angebracht, die unter Bildung wenigstens eines Teils einer Seitenwand des Unterputzkastens mit dem übrigen Unterputzkasten verbindbar ist.

Insbesondere kann die Baugruppe lösbar mit dem übrigen Unterputzkasten verbunden und gegen eine andere Baugruppe austauschbar sein, die bis auf Elemente zur Verbindung mit dem übrigen Unterputzkasten anders gestaltet ist und z.B. ausbrechbare Bereiche für die Bildung von Kabeldurchführungsöffnungen in der betreffenden Seitenwand aufweist.

In einer besonders bevorzugten Ausführungsform der Erfindung ist die genannte Baugruppe zur Bildung einer horizontalen, z.B. oberen, Seitenwand des Unterputzkastens vorgesehen.

Neben der genannten Einrichtung kann die Baugruppe wenigstens einen ausbrechbaren Bereich für die Herstellung einer Kabeldurchführungsöffnung aufweisen.

In einer weiteren besonders bevorzugten Ausführungsform der Erfindung erstreckt sich die genannte Anschlussleiste bis auf einen Anschlussraum, der ggf. Einrichtungen zur Zugentlastung mit der Anschlussleiste verbundener Kabel aufweist, über die gesamte Länge des durch die Baugruppe gebildeten Seitenwandteils.

Zweckmäßig ist für diesen Anschlussraum eine isolierende Abdeckung, ggf. mit einer ausbrechbaren Durchführung für Kabel, vorgesehen. In einer weiteren bevorzugten Ausführungsform der Erfindung weisen die in dem Eckenbereich angeordneten Einrichtungen bewegliche Anschlusselemente, insbesondere um eine Steckachse drehbare Steckanschlusselemente, auf. Die Erfindung wird nachfolgend anhand von Ausführungsbeispielen und der beiliegenden, sich auf eines dieser Ausführungsbeispiele beziehenden Zeichnungen weiter erläutert. Es zeigen:
Fig. 1 einen erfindungsgemäßen Unterputzverteilerkasten in einer Vorderansicht,
Fig. 2 den Verteilerkasten von Fig. 1 in einer Seitenansicht,
Fig. 3 eine Teildarstellung des Verteilerkastens von Fig. 1 mit einer davon losgelösten Baugruppe nach der Erfindung,
Fig. 4 die in Fig. 3 gesondert dargestellte Baugruppe in einer Seitenansicht,
Fig. 5 und 6 die Baugruppe von Fig. 4 in verschiedenen perspektivischen Darstellungen (teilweise ohne Abdeckung 26),
Fig. 7 die Baugruppe von Fig. 4 in einer weiteren Seitenansicht,
Fig. 8 die Baugruppe von Fig. 4 in der Ansicht auf die Vorderseite des Unterputzverteilerkastens (ohne Abdeckung 26),
Fig. 9 die Baugruppe von Fig. 4 in einer Fig. 8 entsprechenden Ansicht bei vollständig abgenommenen Abdeckungen,
Fig. 10 und 11 die Baugruppe von Fig. 4 teilweise in Schnittdarstellung, und
Fig. 12 den Grundkörper der Baugruppe von Fig. 4 ohne Einbauten in perspektivischer Darstellung.

Ein Unterputzversteilerkasten, der in einer quaderförmigen Mauernische unterzubringen ist, umfasst einen Boden 1 und Seitenwände 2 bis 5. Die Seitenwände 2 bis 5 weisen jeweils am freien Rand eine Abwinklung auf, die einen um die Kastenöffnung umlaufenden Flansch 6 bildet.

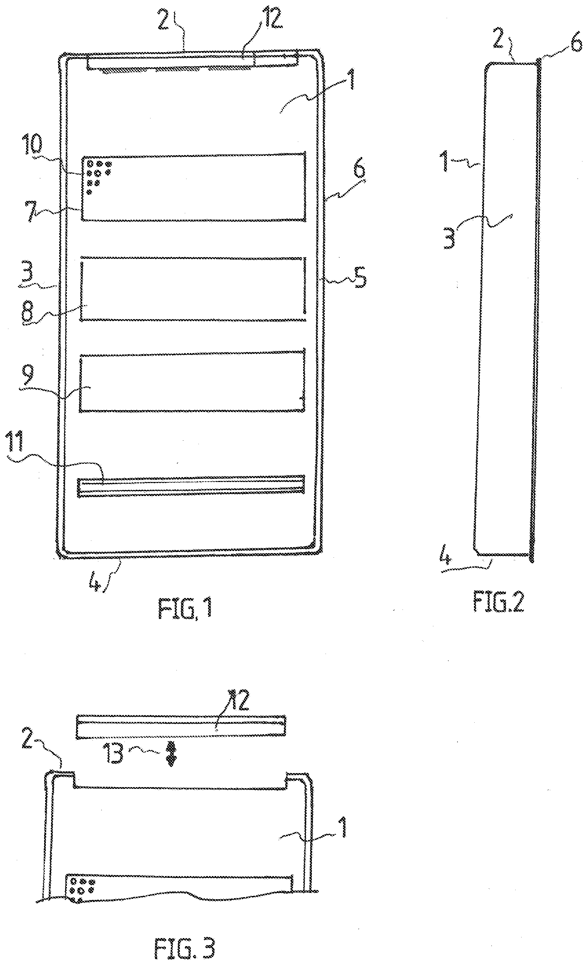

Am Kastenboden 1 sind in dem gezeigten Beispiel Montageplatten 7 bis 9 montiert, Lochungen 10 in den Montageplatten erlauben Schraubbefestigungen von Geräten an den Montageplatten in verschiedenen Positionen. Weitere Geräte können an einer mit dem Boden 1 verbundenen Hutprofilschiene 11 angebracht werden. Wie insbesondere aus Fig. 3 hervorgeht, ist ein Teil der oberen horizontalen Seitenwand 2 durch eine Baugruppe 12 gebildet, die sich in dem gezeigten

Ausführungsbeispiel gemäß Pfeil 13 lösbar mit dem übrigen Unterputzverteilerkasten verbinden lässt. In den schematischen Darstellung von Fig. 1 bis 3 sind Verbindungsmittel nicht gezeigt.

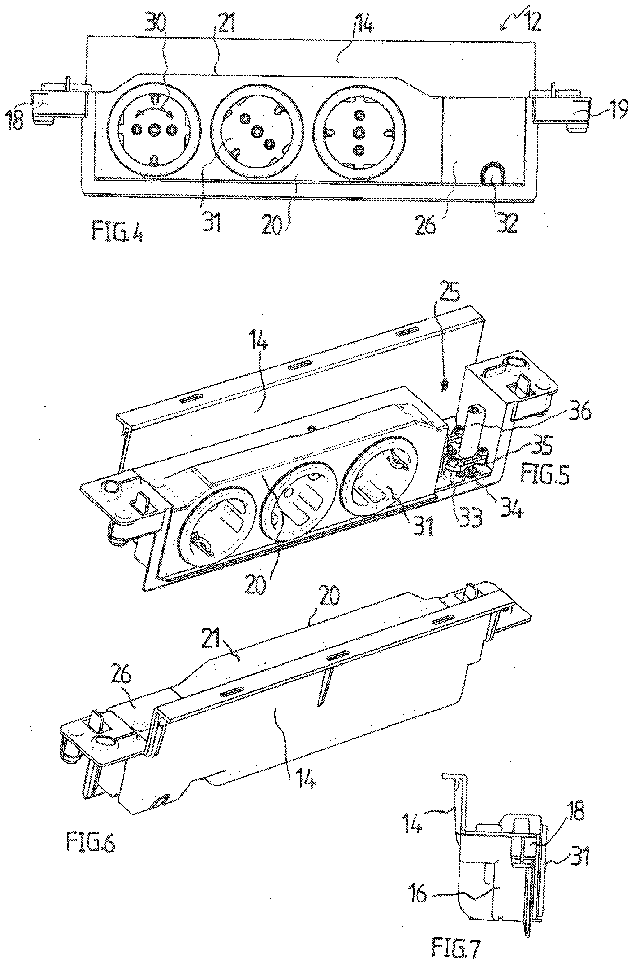

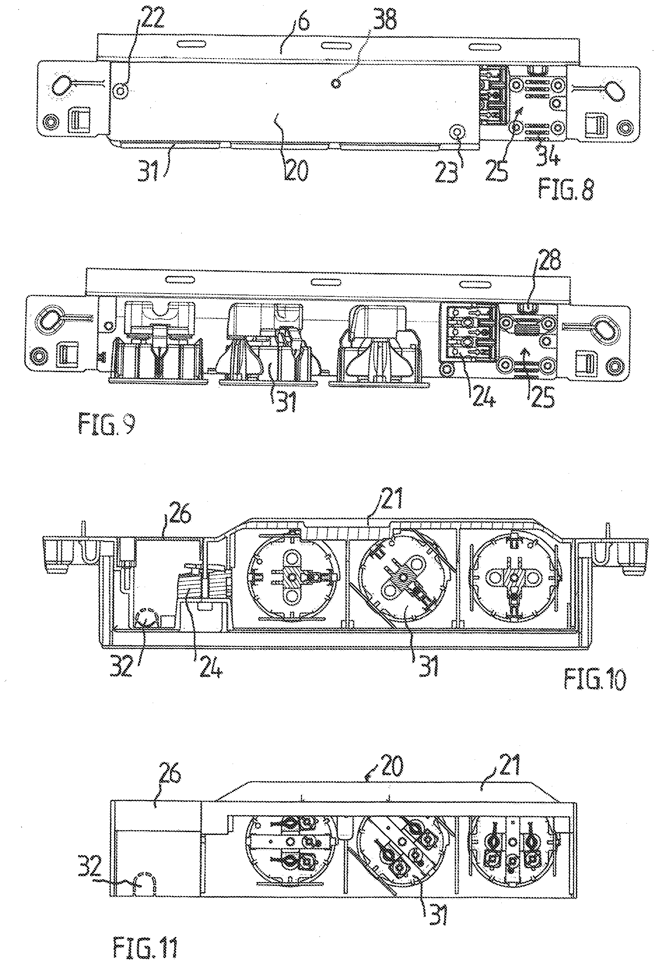

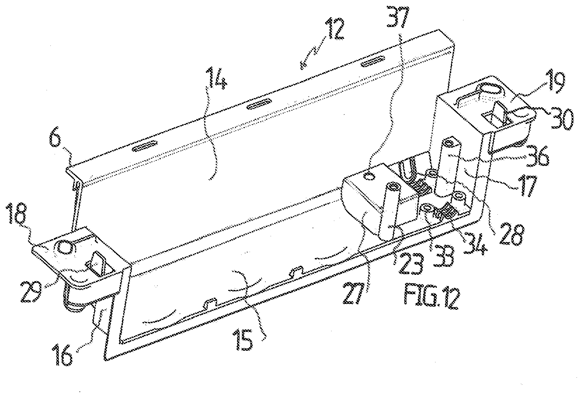

Wie die weiteren Figuren 4 bis 12 erkennen lassen, umfasst die Baugruppe 12 einen teilweise die Seitenwand 2 bildenden Wandteil 14, der sich durchgehend über die Tiefe des Unterputzverteilerkastens senkrecht zum Boden 1 erstreckt und von dem ein den Boden 1 ergänzender Wandteil 15 um 90° abgewinkelt ist (Fig. 12). Von Wandteilen 16 und 17 an den Längsenden der Baugruppe 12 stehen jeweils Einrichtungen 18 und 19 zur Verbindung der Baugruppe 12 mit dem übrigen Unterputzverteilerkasten in Längsrichtung der Baugruppe 12 ab. Im Eckenbereich zwischen den Wandteilen 14 und 15 ist eine Anschlussleiste 20 angeordnet, die in dem gezeigten Ausführungsbeispiel drei Steckdosen 31 für die Entnahme von Netzstrom aufweist. Die Steckdosen 31 sind in einem Gehäuse 21 der Anschlussleiste 20 jeweils gemäß Pfeil 30 verdrehbar gelagert. Das Gehäuse 21 lässt sich mittels Schrauben an Gewindetürmen 22 und 23 an dem Wandteil 15 befestigen (Fig. 8). Ein weiteres Befestigungsloch für eine noch größere, sich z.B. über alle Montageplatten erstreckende Abdeckung ist bei 38 vorgesehen.

Die Anschlussleiste 20 erstreckt sich in ihrer Länge in Längsrichtung der Baugruppe 12 bis zu einer Anschlussklemme 24, die an einen Anschlussraum 25 angegrenzt, der durch eine Abdeckung 26 verschließbar ist. Die Anschlussklemme 24 lässt sich auf einem von dem Wandteil 15 vorstehenden Trägervorsprung 27 befestigen und steht in Verbindung mit der Verdrahtung der Steckdosen 31, die zwischen dem Gehäuse 21 und den Wandteilen 14 und 15 eingeschlossen ist. In den Anschlussraum 25 können durch eine ausbrechbare Öffnung 28 mit der Anschlussklemme 24 verbindbare Kabel eingeführt werden. Für diesen Zweck lässt sich auch eine ausbrechbare Öffnung 32 in der Abdeckung 26 nutzen. In dem Anschlussraum 25 lassen sich ferner Einrichtungen 33, 34 und 35 zur Zugentlastung eingeführter Kabel unterbringen. Zur Befestigung der Abdeckung 26 dient ein Gewindeturm 36, zur Befestigung der Anschlussklemme 24 ein Befestigungsloch 37.

Es versteht sich, dass die Baugruppe 12 komplett vorgefertigt in den Unterputzverteilerkasten einbaubar ist und es nur noch einer Verbindung durch die Öffnung 28 oder/und 32 zugeführter Kabel mit der Anschlussklemme 24 bedarf. Es versteht sich, dass sich die Öffnungen 28, 32 auch zur Verlegung eines durch beide Öffnungen durchgehenden Kabels nutzen lassen.

Die Baugruppe 12 rastet bei Verschiebung parallel zum Wandteil 14 an dem Unterputzverteilerkasten ein. Über Hebel 29 kann die Einrastung gelöst und die Baugruppe 12 wieder abgenommen und z.B. gegen eine den Unterputzverteilerkasten vervollständigende Baugruppe ohne Anschlusselemente ausgetauscht werden.

Über die Steckdosen 31 lassen sich an den Montageplatten 7 bis 12 installierte Geräte mit Betriebsstrom versorgen. Die Verdrehbarkeit der Steckdosen erleichtert den gleichzeitigen Anschluss von mehreren Steckernetzgeräten, die sich aufgrund ihrer Abmessung ansonsten beim Anschluss gegenseitig behindern würden.

## Patentansprüche

1. Unterputzkasten der Elektroinstallation von Gebäuden, insbesondere Unterputzverteilerkasten, mit einem Kastenboden (1), Seitenwänden (2-5) und einer separaten Baugruppe (12), wobei die separate Baugruppe (12) wenigstens einen Teil (14) einer der Seitenwände (2) bildet und durch eine Verschiebung parallel zum Teil (14) der Seitenwand (2) mit dem übrigen Unterputzkasten lösbar verbindbar ist, wobei Einrichtungen für die Herstellung einer elektrischen Anschlussverbindung zu einer in dem Unterputzkasten montierbaren Installationseinheit an der separaten Baugruppe (12) in einem durch den Kastenboden (1) und wenigstens eine (2) der Seitenwände (2-5) gebildeten Eckenbereich angeordnet sind, wobei die Einrichtungen eine sich entlang dem betreffenden Rand des Kastenbodens (1) erstreckende Anschlussleiste (20), die als Anschlusselemente (31) mehrere Netzstromsteckdosen aufweist, umfassen.

2. Unterputzkasten nach Anspruch 1, **dadurch gekennzeichnet, dass** die als Netzstromsteckdosen ausgebildeten Anschlusselemente (31) beweglich sind, vorzugsweise als um eine Steckachse drehbar gelagerte Steckanschlusselemenente ausgebildet sind.

3. Unterputzkasten nach Anspruch 1 oder 2, **dadurch gekennzeichnet, dass** die Einrichtungen Anschlusselemente (31) für eine Netz- oder/und Schwachstromverbindung aufweisen.

4. Unterputzkasten nach einem der Ansprüche 1 bis 3, **dadurch gekennzeichnet, dass** sich wenigstens ein den Eckenbereich bildender Wandteil (14) der Seitenwand (2) durchgehend über die gesamte Kastentiefe senkrecht zu dem Kastenboden (1) erstreckt.

5. Unterputzkasten nach einem der Ansprüche 1 bis 4, **dadurch gekennzeichnet, dass** die Baugruppe (12) zur Bildung einer horizontalen Seitenwand (2) des Unterputzkastens vorgesehen ist.

6. Unterputzkasten nach einem der Ansprüche 1 bis 5, **dadurch gekennzeichnet, dass** die Baugruppe (12) wenigstens einen ausbrechbaren Bereich für eine Kabeldurchführung (28, 32) aufweist.

7. Unterputzkasten nach einem der Ansprüche 1 bis 6, **dadurch gekennzeichnet, dass** sich die Anschlussleiste (20) bis auf einen Anschlussraum (25), der ggf. Einrichtungen zur Zugentlastung mit der Anschlussleiste (20) verbundener Kabel aufweist, über die gesamte Länge der durch die Baugruppe gebildeten Seitenwandteils (14) erstreckt.

8. Unterputzkasten nach Anspruch 7, **dadurch gekennzeichnet, dass** für den Anschlussraum (25) eine isolierende Abdeckung (26) vorgesehen ist, ggf. mit dem ausbrechbaren Bereich für eine Kabeldurchführung.

## Claims

1. Concealed box of the electrical installation of buildings, in particular concealed distribution box, having a box base (1), side walls (2-5) and a separate assembly (12), wherein the separate assembly (12) forms at least one part (14) of one of the side walls (2) and is able to be connected in a releasable manner to the rest of the concealed box by way of a displacement parallel to the part (14) of the side wall (2), wherein devices for producing an electrical terminal connection to an installation unit on the separate assembly (12), said installation unit being able to be mounted in the concealed box, are arranged in a corner region formed by the box base (1) and at least one (2) of the side walls (2-5), wherein the devices comprise a terminal strip (20), which extends along the relevant edge of the box base (1) and which has a plurality of mains current plug sockets as terminal elements (31).

2. Concealed box according to Claim 1, **characterized in that** the terminal elements (31) formed as mains current plug sockets are movable, preferably are formed as plug terminal elements mounted so as to be rotatable about a plug axis.

3. Concealed box according to Claim 1 or 2, **characterized in that** the devices have terminal elements (31) for a mains or/and low current connection.

4. Concealed box according to one of Claims 1 to 3, **characterized in that** at least one wall part (14) of the side wall (2) forming the corner region extends continuously over the entire box depth perpendicular to the box base (1).

5. Concealed box according to one of Claims 1 to 4, **characterized in that** the assembly (12) is provided to form a horizontal side wall (2) of the concealed box.

6. Concealed box according to one of Claims 1 to 5, **characterized in that** the assembly (12) has at least one breakable region for a cable lead-through (28, 32).

7. Concealed box according to one of Claims 1 to 6, **characterized in that** the terminal strip (20) extends over the entire length of the side wall part (14) formed by the assembly up to a terminal space (25), which, where appropriate, has devices for strain relief of cables connected to the terminal strip (20).

8. Concealed box according to Claim 7, **characterized in that** an insulating cover (26) is provided for the terminal space (25), where appropriate with the breakable region for a cable lead-through.

## Revendications

1. Boîtier encastrable de l'installation électrique de bâtiments, en particulier boîtier de distribution encastrable, comprenant un fond (1), des parois latérales (2 à 5) et un module séparé (12), le module séparé (12) formant au moins une partie (14) de l'une des parois latérales (2) et pouvant être relié de manière amovible au reste du boîtier encastrable par coulissement parallèle à la partie (14) de la paroi latérale (2), des moyens destinés à réaliser une connexion électrique avec une unité d'installation, pouvant être montée dans le boîtier encastrable, étant agencés au niveau du module séparé (12) dans une région de coin formée par le fond (1) et l'une (2) au moins des parois latérales (2 à 5), les moyens comprenant un bornier (20) qui s'étend le long du bord respectif du fond (1) et qui comporte comme éléments de connexion (31) une pluralité de prises de courant femelles.

2. Boîtier encastrable selon la revendication 1, **caractérisé en ce que** les éléments de connexion (31) conçus comme des prises de courant femelles sont mobiles, de préférence sont conçus comme des éléments de connexion enfichables montés de manière rotative sur un axe d'enfichage.

3. Boîtier encastrable selon la revendication 1 ou 2, **caractérisé en ce que** les moyens comprennent des éléments de connexion (31) destinés à une connexion secteur et/ou à faible courant.

4. Boîtier encastrable selon l'une des revendications 1 à 3, **caractérisé en ce qu'**au moins une partie (14), formant la région de coin, de la paroi latérale (2) s'étend de manière continue sur toute la profondeur du boîtier perpendiculairement au fond (1).

5. Boîtier encastrable selon l'une des revendications 1 à 4, **caractérisé en ce que** le module (12) est prévu pour former une paroi latérale horizontale (2) du boîtier encastrable.

6. Boîtier encastrable selon l'une des revendications 1 à 5, **caractérisé en ce que** le module (12) comporte au moins une zone de rupture destinée à un passage de câble (28, 32).

7. Boîtier encastrable selon l'une des revendications 1 à 6, **caractérisé en ce que** le bornier (20) s'étend sur toute la longueur de la partie de paroi latérale (14) formée par le module à l'exception d'un espace de connexion (25) qui comporte éventuellement des moyens de décharge de traction de câbles reliés au bornier (20) .

8. Boîtier encastrable selon la revendication 7, **caractérisé en ce qu'**un couvercle isolant (26), éventuellement muni de la zone de rupture destinée à un passage de câble, est prévu pour l'espace de connexion (25) .
